# EUROPEAN PATENT APPLICATION

(11) **EP 2 942 218 A1**
(43) Date of publication of application: **11.11.2015**
(21) Application number: 15166483.6
(22) Date of filing: 05.05.2015
(51) Int. Cl.: B60K 1/00, B60K 17/24

(54) **DRIVE UNIT FOR ELECTRIC VEHICLES**

(30) Priority: 05.05.2014 IT VR20140123
(71) Applicant: Movimotor S.r.l., 36078 Valdagno (VI) (IT)
(72) Inventor: Bertoldi, Devid, 36078 Valdagno (Vicenza) (IT)
(74) Representative: Feltrinelli, Secondo Andrea

(57) **Abstract**

A drive unit for electric vehicles, comprising an electric motor (2), equipped with a first cap (10) and with an opposite second cap (12), and with an output shaft (8), at least one reduction stage (14) connected to said output shaft (8), at least one mechanical differential (16) associated with said reduction stage (14), a first axle (18) and a second axle (20), parallel to said output shaft (8), associated with said mechanical differential (16) and on which a first wheel (R1) and a second wheel (R2) of the electric vehicle are respectively mounted, said mechanical differential (16) being housed inside a box (22) fixedly connected to said first cap (10), and rotary support means (24,26,28; 24,26,28,106) of said first axle (18) and second axle (20), said rotary support means (24,26,28; 24,26,28,106) comprising a first support (24) of said first axle (18) rigidly associated with said box (22). The rotary support means (24,26,28; 24,26,28,106) also comprise a second support (26) for the proximal end (20a) of said second axle (20) rigidly associated with said box (22), and a third support (28) for the distal end (20b) of said second axle (20) rigidly associated with said second cap (12) of said electric motor (2).

## Description

### TECHNICAL FIELD OF THE INVENTION

The present invention concerns a drive unit for electric vehicles.

More specifically, the present invention concerns a drive unit for electric vehicles suitable for driving two wheels of the vehicle arranged on the same axle.

### STATE OF THE ART

In various industrial sectors, vehicles with various functions are used that comprise an electric drive unit preferably powered by rechargeable battery.

For example, such drive units are foreseen in self-propelled industrial trucks, forklift trucks, floor-cleaning machines, and the like, just to name a few.

A drive unit of this type usually comprises an electric motor - for example running on direct current but also possibly of another type - the output shaft of which transmits the motion to an axle, parallel thereto, at the ends of which two wheels are mounted.

The transmission of motion from the electric motor to the aforementioned axle takes place through one or more reduction stages and a differential, which as known, when cornering, allows the drive torque to be divided between the two wheels, preventing the outer one from skidding on the ground.

In known drive units the reduction stages and the differential are housed inside the same box fixed to the electric motor: such a box is passed through by the aforementioned axle on which the wheels are mounted, which as stated is parallel to the output shaft of the motor itself.

Since the length of the axle of the wheels is considerably greater than the axial extension of the box that contains the reducer and the differential, both side of the box have substantially tubular extensions, of suitable length, fixed thereto, which support and enclose the two portions of the axle of the wheels and that also contain the rolling bearings for the axle itself, the sealing gaskets and all the other necessary components. Such tubular extensions are normally made by moulding, preferably from aluminium alloy, and must be suitably designed and sized to house the bearings of the axle of the wheels and all of the other necessary mechanical components.

This obviously means an increased cost that is not at all negligible with respect to the overall production cost of the product.

Moreover, as stated, such tubular extensions are directly fixed to the box that contains the reducer and the differential, and are thus completely canti-levered with respect to the latter.

This condition, especially in drive units having relatively large track, can be disadvantageous since the necessary mechanical size of the canti-levered parts - i.e. the tubular extensions - result in a very large transversal bulk of the unit.

This fact can sometimes compromise the installation on small sized vehicles or in any case ones that have limited space for the drive unit.

### PURPOSES OF THE INVENTION

The technical task of the present invention is to improve the state of the art.

In this technical task, a purpose of the present invention is to provide a drive unit for electric vehicles characterised by lower production costs with respect to known units. Yet another purpose of the present invention is to provide a drive unit for electric vehicles that has smaller transversal bulk with respect to known units, so as to also be able to be installed in vehicles that have limited space for such a unit.

A further purpose of the present invention is to provide a drive unit for electric vehicles that can easily be modified and personalised in relation to the specific requirements of the user.

This task and these purposes are accomplished by the drive unit for electric vehicles according to the attached claim 1.

The drive unit for electric vehicles according to the invention comprises an electric motor, equipped with a first cap and with an opposite second cap, as well as with an output shaft.

The unit also comprises at least one reduction stage, connected to the output shaft of the motor, and at least one mechanical differential associated with the aforementioned reduction stage.

The drive unit also comprises a first axle and a second axle, parallel to the output shaft of the motor, associated with the mechanical differential, and on which a first wheel and a second wheel of the electric vehicle are respectively mounted.

The mechanical differential is housed inside a box fixedly connected to said first cap. The drive unit also comprises rotary support means of the first axle and of the second axle, which comprise a first support of the first axle rigidly associated with the aforementioned box.

The rotary support means also comprise a second support for the proximal end of the second axle, rigidly associated with the box, and a third support for the distal end of the second axle, rigidly associated with the second cap of the electric motor.

These characteristics make it possible to obtain a particularly compact and strong solution, without canti-levered parts and therefore with particularly small transversal bulk.

The dependent claims refer to preferred and advantageous embodiments of the invention.

### BRIEF DESCRIPTION OF THE DRAWINGS.

The features of the invention will become clearer to those skilled in the art from the following description and from the attached tables of drawings, given as a non-limiting example, in which:
figure 1 is an axonometric view of the drive unit according to the invention;
figure 2 is a front view of the drive unit;
figure 3 is a side view of the drive unit;
figure 4 is another side view of the unit, from the opposite side with respect to that of figure 3;
figure 5 is an exploded axonometric view of the drive unit;
figure 6 is a front section view of the drive unit;
figure 7 is a detail of figure 6;
figure 8 is an axonometric view of another embodiment of the drive unit according to the invention;
figure 9 is a front view of the drive unit of figure 8;
figure 10 is a plan view of the drive unit of figures 8,9;
figure 11 is a side view of the drive unit of figures 8-10;
figure 12 is another side view of the unit of figures 8-11, from the opposite side with respect to that of figure 11;
figure 13 is an exploded axonometric view of the drive unit of figures 8-12;
figure 14 is a front section view of the drive unit of figures 8-13;
figure 15 is a detail of figure 14;
figure 16 is an axonometric view of another embodiment of the drive unit according to the invention;
figure 17 is a front view of the drive unit of figure 16;
figure 18 is a plan view of the drive unit of figures 16,17;
figure 19 is a side view of the drive unit of figures 16-18;
figure 20 is another side view of the unit of figures 16-19, from the opposite side with respect to that of figure 19;
figure 21 is an exploded axonometric view of the drive unit of figures 16-20;
figure 22 is a front section view of the drive unit of figures 16-21;
figure 23 is an axonometric view of another embodiment of the drive unit according to the invention;
figure 24 is a side view of the drive unit of figure 23;
figure 25 is an exploded axonometric view of the drive unit of figures 23-24;
figure 26 is a section of the drive unit taken according to the plane XXVI-XXVI of figure 24;
figure 27 is a section of the drive unit taken according to the plane XXVII-XXVII of figure 24;
figure 28 is a plan view of the drive unit of figures 23-27;
figure 29 is a front view of the drive unit of figures 23-28;
figure 30 is an axonometric view of another embodiment of the drive unit according to the invention;
figure 31 is a side view of the drive unit of figure 30;
figure 32 is an exploded axonometric view of the drive unit of figures 30-31;
figure 33 is a section of the drive unit taken according to the plane XXXIII-XXIII of figure 30;
figure 34 is a section of the drive unit taken according to the plane XXXIV-XXIV of figure 30;
Figure 35 is a plan view of the drive unit of figures 30-34;
figure 36 is a front view of the drive unit of figures 30-35.

### EMBODIMENTS OF THE INVENTION.

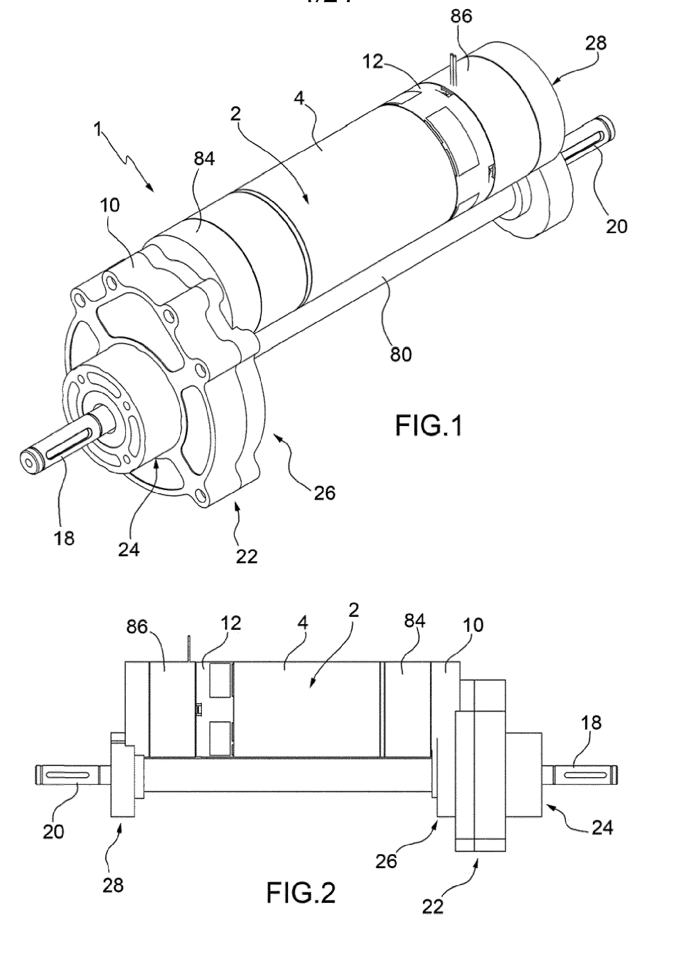

With reference to the attached figure 1, a drive unit for electric vehicles according to the present invention is wholly indicated with 1.

The drive unit 1 according to the present invention can be installed on any electrically-driven self-propelled vehicle, for example an industrial truck, a floor-cleaning machine, or similar, without any particular limitation to the purposes of the present invention. The drive unit comprises an electric motor 2.

For example, the electric motor 2 can be of the two-pole direct current type, or a direct current motor with a different number of poles, or else an electric motor of a different type, for example using alternating current or brushless.

The type of motor 2 foreseen in the drive unit 1 does not constitute a restriction for the purposes of the present invention.

Only for illustrating and not limiting purposes, the motor 2 of the drive unit 1 described hereafter is of the direct current type.

The motor 2 comprises a tubular casing 4, inside which a stator is foreseen.

The motor 2 also comprises an armature 6, or rotor, rotatably supported inside the aforementioned stator.

The armature 6 has an output shaft 8 rigidly associated with it.

The output shaft 8 comprises a first end 8a and an opposite second end 8b.

The motor 2 also comprises a first cap 10 and a second cap 12, opposite each other. The first cap 10 and the second cap 12 rotatably support the output shaft 8 of the motor 2, respectively with bearings 10a,12a.

The first cap 10, the second cap 12 and the tubular casing 4 are clamped in a pack through screws 13.

In particular, the second cap 12 acts as a brush-holder, and the brush-holding base 11 is housed inside it.

The cap 12 comprises removable side covers, which allow the brushes to be quickly replaced.

The electric motor 2 will not be described in any further detail, since it does not constitute a specific object of the present invention.

The drive unit 1 also comprises at least one speed reduction stage 14.

The reduction stage 14 is connected to the output shaft 8 of the motor 2, in particular to the first end 8a of the output shaft 8.

The drive unit 1 also comprises a mechanical differential 16.

The differential 16 is mechanically associated with the aforementioned reduction stage 14.

The drive unit 1 comprises a first axle 18 and a second axle 20.

The first axle 18 and the second axle 20 are parallel to the output shaft 8 of the motor 2, and a first wheel R1 and a second wheel R2 of the electric vehicle are respectively mounted on them.

The first axle 18 and the second axle 20 are mechanically associated with the differential 16.

The mechanical differential 16, when cornering, allows the drive torque to be divided between the two wheels R1,R2, preventing the outer one from sliding on the ground. The first axle 18 and the second axle 20 can have the same length, or different length.

According to a technical solution usually preferred in the field of electrically-driven vehicles, one of the two axles 18,20 has a shorter length than the other, so that the electric motor 2, the reduction stage 14 and the differential 16 are positioned close to one of the two wheels R1,R2: this normally makes the maintenance operations on the drive unit 1 easier.

For example, in the embodiment of the drive unit 1 represented in the figures, the first axle 18 has a shorter length than the second axle 20: this means that the motor 2 - reduction 14 - differential 16 assembly is positioned close to the first wheel R1.

The second axle 20, which as stated is the longest one, comprises a proximal end 20a - i.e. the one closest to the differential 16 - and a distal end 20b.

The mechanical differential 16 is housed inside a box 22.

The reduction stage 14 is also housed inside the box 22 in which the differential 16 is contained, but it could also be contained inside another independent box.

The box 22 is fixedly connected to the first cap 10 of the motor 2.

The drive unit 1 also comprises rotary support means 24,26,28 of the first axle 18 and of the second axle 20.

By rotary support we mean a fixed part of the drive unit that allows the rotation of the first and of the second axle 18,20.

The rotary support means 24,26,28, in greater detail, comprise a first support 24 of the first axle 18.

The first support 24 is rigidly associated with the box 22.

According to an aspect of the present invention, the support means 24,26,28 also comprise a second support 26 for the proximal end 20a of the second axle 20.

The second support 26 is rigidly associated with the box 22, as will become clearer hereafter.

According to yet another aspect of the present invention, the drive unit 1 comprises a third support 28 for the distal end 20b of the second axle 20.

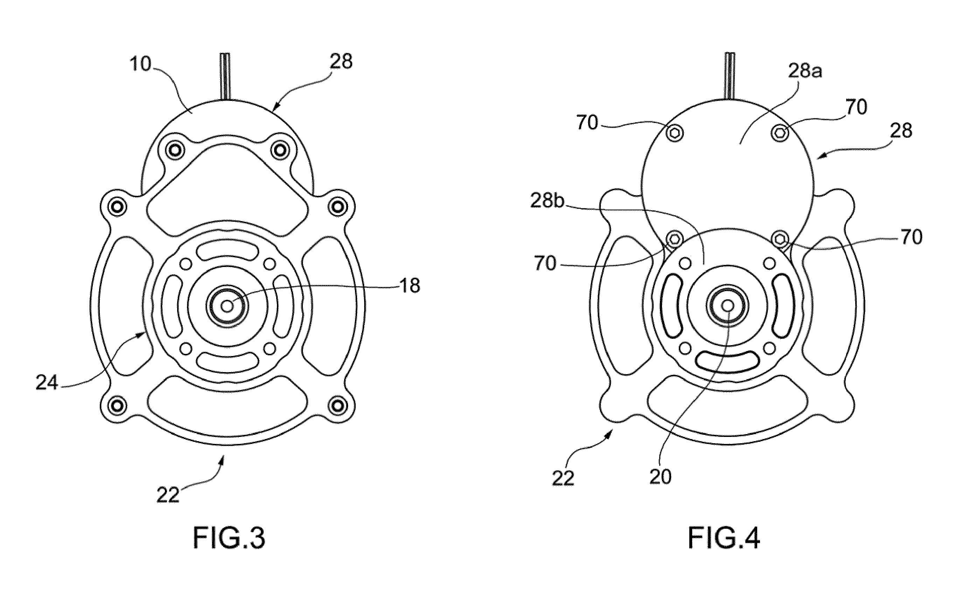

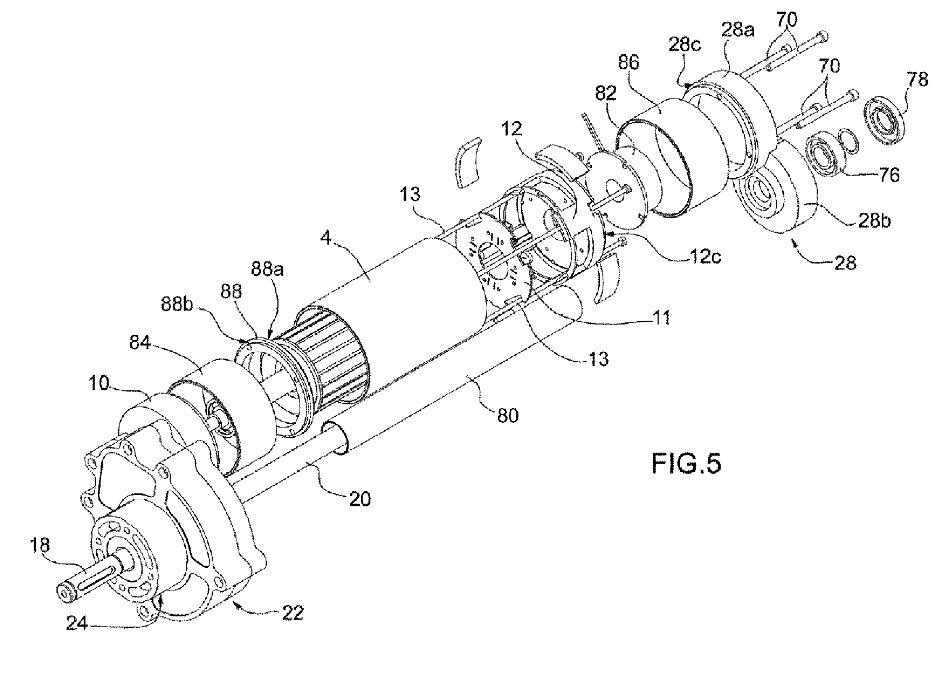

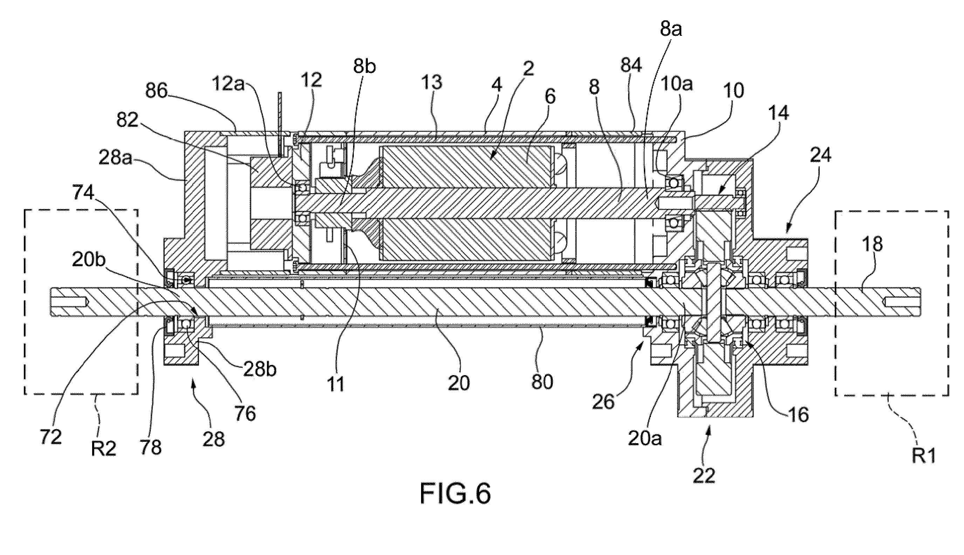

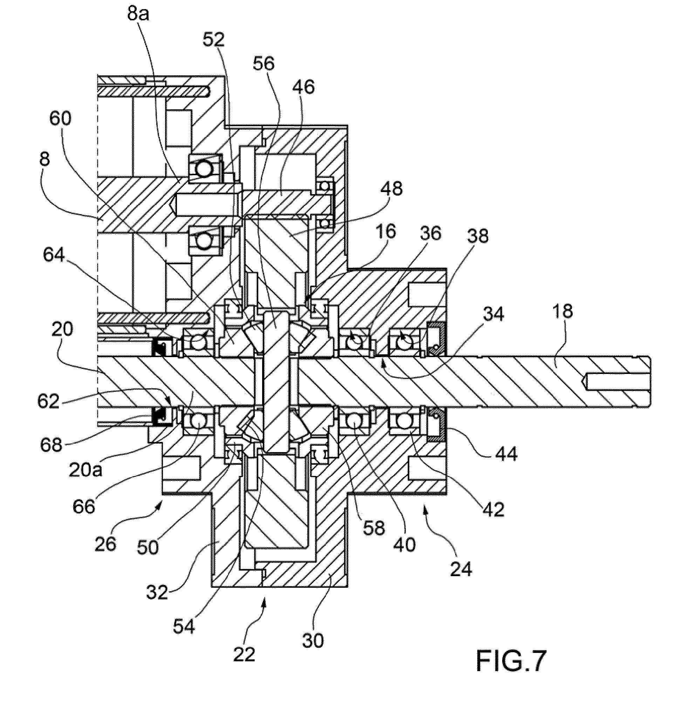

The third support 28 is rigidly associated with the second cap 12 of the electric motor 2. As can be intuitively understood by observing figures 1-7, this solution makes it possible to effectively support both axles 18,20 of the drive unit 1 close to the wheels R1,R2, without canti-levered parts as happens, on the other hand, in known drive units. Further advantageous characteristics of this solution will become clearer hereafter.

The box 22 that contains the reduction stage 14 and the differential 16 comprises a first half-shell 30 and second half-shell 32, coupled together.

The second half-shell 32 is fixedly connected to the first cap 10 of the motor 2.

In greater detail, the second half-shell 32 is made integral, i.e. in a single piece, with the first cap 10 of the motor 2.

In other embodiments of the invention, the second half-shell 32 could be physically separated from the first cap 10, and associated with it through connection means, for example of the screw type of the interlocking type, or similar.

According to another aspect of the invention, the first support 24 is made integral, i.e. in a single piece, with the first half-shell 30.

More specifically, the first support 24 comprises a side extension of the first half-shell 30, defining a first through hole 34.

At the aforementioned first through hole 34 there are opposite first seats 36,38.

The first seats 36,38 are intended to house respective first rotatable support bearings 40,42 of the first axle 18.

The bearing 42 is closed by a respective cover 116c.

In the most outer first seat 38 a first sealing gasket 44 is housed. The seal can also be at other points or not be there at all.

The reduction stage 14 comprises a first cylindrical toothed wheel 46, mounted coaxial to the output shaft 8 of the motor 2.

Moreover, the reduction stage 14 comprises a second cylindrical toothed wheel 48, engaging with the aforementioned first cylindrical toothed wheel 46.

The second wheel 48 is coaxial to the axles 18,20.

The mechanical differential 16 comprises a satellite-carrying cage 50, inside which there are a first satellite 52 and a second satellite 54, both conical, mounted on the same pin 56 fixedly connected to the cage 50.

The first satellite 52 and the second satellite 54 engage with a first conical wheel 58 and a second conical wheel 60, respectively mounted at the ends of the first axle 18 and of the second axle 20.

The second support 26 is rigidly connected to the second half-shell 32 of the box 22.

In greater detail, the second support 26 is made integral, i.e. in a single piece, with the second half-shell 32 of the box 22.

The second support 26 comprises a respective second through hole 62.

At the second through hole 62 there is a second seat 64 for a second support bearing 66 of the proximal end 20a of the second axle 20.

The second support 26 also comprises a further seat for a second sealing gasket 68.

The third support 28 comprises a first portion 28a for connecting to the second cap 12 of the motor 2, and a second support portion 28b of the second axle 20.

The third support 28 of the drive unit 1 is fixed to the second cap 12, with its first portion 28a, with screws 70.

In greater detail, the third support 28 comprises a respective third through hole 72, foreseen in particular in the second portion 28b.

At such a third through hole 72 there is a third seat 74 for a third bearing 76 for supporting the distal end 20b of the second axle 20.

In the same third seat 74 a third sealing gasket 78 is also mounted.

The second axle 20 is housed inside a respective tubular element 80.

The tubular element 80 has essentially protective functions, i.e. it protects the rotation of the second axle 20 from possible external interference as well as possible workers who might get close to the drive unit 1 in operation.

The tubular element 80 is mounted between the second support 26 and the third support 28.

The tubular element 80 can be of any shape and size.

In some embodiments of the invention, the tubular element 80 could be absent.

The drive unit 1 according to the invention comprises a brake 82 for the electric motor 2.

The brake 82 can be of the electromagnetic spring type, or of any other type suitable for the application.

The brake 82 is associated with the second end 8b of the output shaft 8 and is supported at the third support 28. In particular, the brake 82 is arranged between the second cap 12 and the third support 28.

This is an optimal solution in terms of the bulk and the positioning of the single components inside the unit 1.

In the embodiment of the invention illustrated in figures 1-7, the drive unit comprises at least one spacer element 84,86.

In particular, in the embodiment represented there are a first spacer element 84 and a second spacer element 86.

In other embodiments of the invention, only one from the first spacer element 84 and the second spacer element 86 could be present.

The first spacer element 84 is arranged between the motor 2 and the second support 26. In greater detail, the first spacer element 84 is arranged between the tubular casing 4 of the motor 2 and the first cap 10.

The first spacer element 84 preferably consists of a tubular piece, having the same cross section as the tubular casing 4.

This solution is particularly advantageous and cost-effective since the first spacer element 84 can be made from the same semi-worked project with which the tubular casing 4 of the motor 2 is made.

In order to obtain the optimal coupling between the tubular casing 4 and the first spacer element 84, a joining element 88 is foreseen, consisting, for example, of a collar comprising two opposite abutment surfaces 88a,88b, respectively for the edge of the tubular casing 4 and of the first spacer element 84.

The first spacer element 84 allows the track of the drive unit 1 to be increased.

Indeed, it should be noted that each drive unit is obviously characterised by its own specific size parameters, and mainly it is characterised by the track of the vehicle on which the unit is installed, i.e. the distance between the centres of the wheels of one same axle.

As the track of the vehicle varies, therefore, the distance between the support bearings of the axle of the wheels must consequently also be varied, since each of the bearings must be installed the correct distance from the respective wheel.

In known drive units, this requirement can be satisfied only by replacing the tubular extensions, as stated above, with others of different size, suitably calculated for the specific application.

For the user, therefore, varying the track in a known drive unit constitutes a substantial cost, since it is necessary to make two new tubular extensions of the correct size.

As stated, the first spacer element 84 makes it possible to increase the distance, along the axle of the wheels R1 and R2, between the second support 26 and the third support 28.

This makes it possible to mount a second axle 20 of greater length.

In practice, therefore, since it is advisable to keep the length of the first axle 18 unchanged mainly for the sake of easy maintenance, the track of the drive unit 1 can be varied by increasing the length of the second axle 20.

In the case in which it is necessary, the output shaft 8 of the motor 2 can also be replaced with a longer one to increase the track of the drive unit 1.

The second spacer element 86 is arranged between the motor 2 and the third support 28; in particular it is arranged between the second cap 12 and the third support 28.

The brake 82 of the electric motor 2 is therefore housed inside the second spacer element 86.

The second spacer element 86 also preferably consists of a tubular piece having the same cross section as the tubular casing 4 of the motor 2, with the economic-production advantages mentioned above.

In order to obtain an optimal coupling between the various parts, the second cap 12 and the first portion 28a of the second support 28 are provided with respective abutment surfaces 12c, 28c respectively for the opposite edges of the second spacer element 86. The second spacer element 86 also makes it possible to increase the track of the drive unit 1, as it happens for the first spacer element 84.

In particular, the second spacer element 86 can be used to obtain a further increase in track that could not be obtained using just the first spacer element 84, due to limitations such as the length of the output shaft 8 of the electric motor 2 or other.

The user can determine the desired length of the track of the drive unit 1 by suitably selecting, and at one's own discretion, both the length of the first spacer element 84 and that of the second spacer element 86, based on one's own specific application requirements; or, as stated, the user can decide to use only one from the first spacer element 84 and the second spacer element 86.

As it can be worked out, the variation of the track of the drive unit 1 according to the present invention can be obtained, firstly, in a much more cost-effective manner with respect to known units, since it is not necessary to make various moulded components of different sizes: the solution according to the invention, on the other hand, makes it possible to obtain the same result by simply cutting the tubular semi-worked pieces to size.

As well as this, the support of the first axle 18, and above all of the second axle 20, is much more solid and effective with respect to known units, since it is obtained with supports 24,26,28 that are firmly connected to the motor 2 at many points, thus making a compact structure, without canti-levered portions, in which the stresses are certainly absorbed better even with a construction that is lighter overall.

Another important advantage consists of the fact that the transversal bulk of the drive unit 1 - with respect to the axle of the wheels R1,R2 - is much smaller with respect to known units: indeed, since there are no elements completely canti-levered like in known units, the transversal dimensions of the supports of the axles can be advantageously reduced.

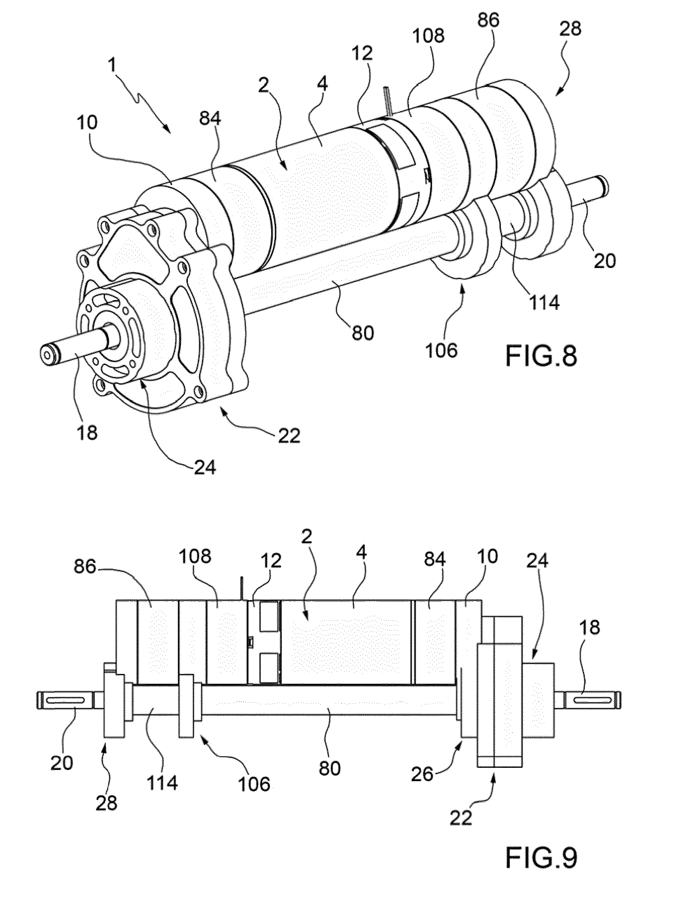

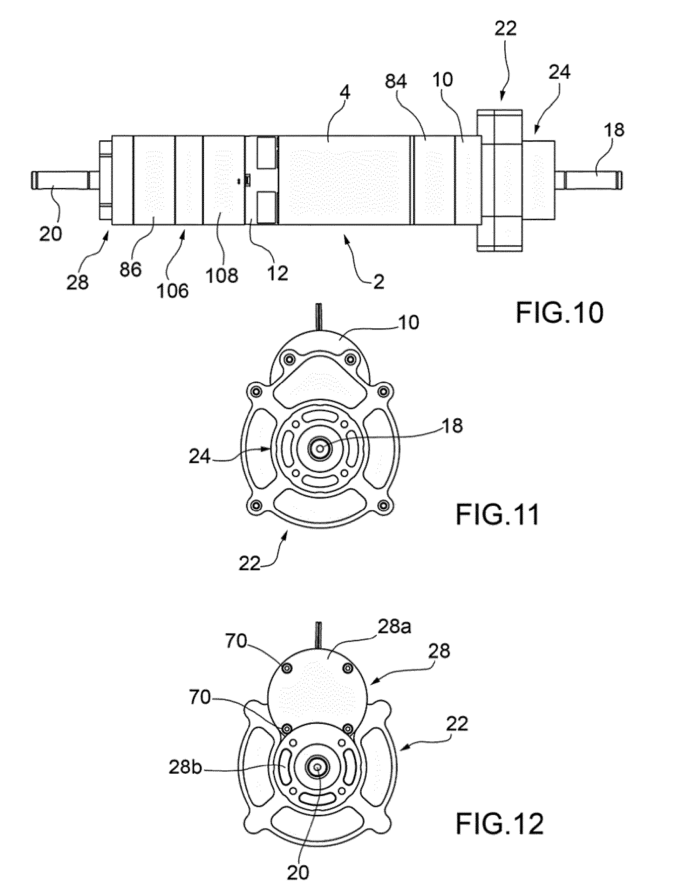

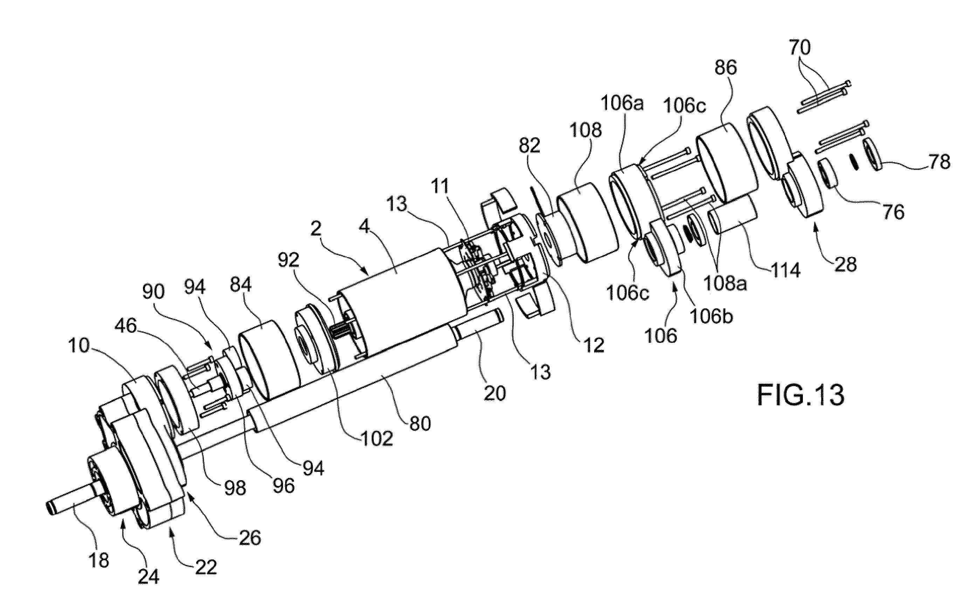

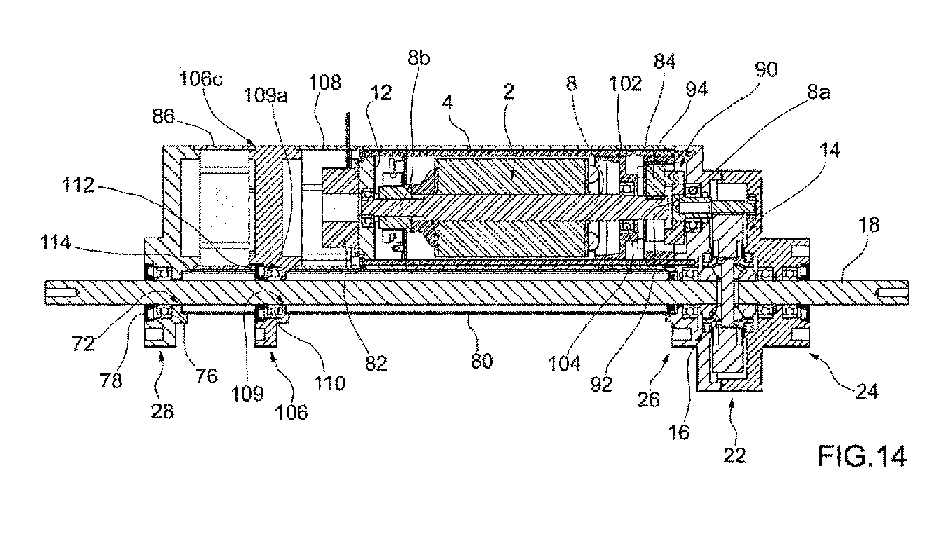

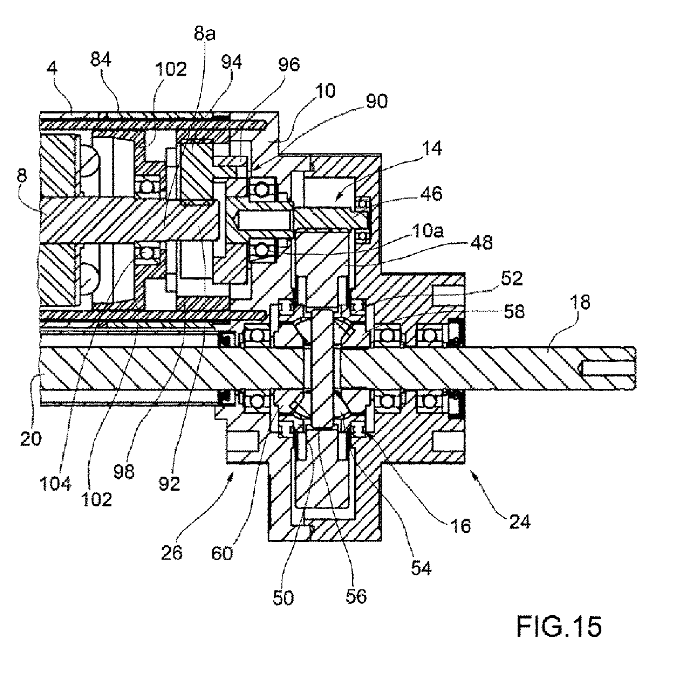

Another embodiment of the drive unit according to the present invention is illustrated in figures 8-15.

In the description of this embodiment, the parts corresponding to those of the previous embodiment are indicated with the same reference numeral.

This embodiment differs from the previous embodiment of figures 1-7 in that it comprises a second speed reduction stage 90 of the motion transmission from the motor 2 to the mechanical differential 16.

The second reduction stage 90 is housed inside the first spacer element 84.

The second reduction stage 90 is of the epicyclic type, but it could also be of another type.

In particular, the second reduction stage 90 comprises a solar toothed pinion 92, which can be made directly in the first end 8a of the output shaft 8 of the motor 2.

The toothed pinion 92 engages with satellites 94 mounted on a satellite-holder 96.

The satellites 94 also engage with a fixed toothed crown 98 inserted inside the first spacer element 84.

The satellite-holder 96 also carries, coaxial to the output shaft of the motor 8, the first toothed wheel 46 that engages with the second wheel 48 of the reduction stage 14, also foreseen in the previous embodiment.

In order to ensure optimal support of the second reduction stage 90, between the tubular casing 4 of the motor 2 and the first spacer element 84 there is a flange 102 with a respective bearing 104 that supports the output shaft 8 of the motor.

The use of a second epicyclic reduction stage 90 - in reality arranged upstream of the stage 14 in gear cascade - can be particularly advantageous to use due to its very small bulk, since the inlet and outlet axles are coaxial.

Moreover, the efficiency of transmission of motion from the motor 2 to the axles 18,20 can thus be increased thanks to the high efficiency of the epicyclic gearing.

The present embodiment of the invention also differs from the previous embodiment in that the rotary support means 24,26,28,106 also comprise a fourth support 106 for the second axle 20.

The drive unit also comprises a third spacer element 108.

The third spacer element 108 is arranged between the second cap 12 and the fourth support 106.

The brake 82 of the electric motor 2 is housed inside the third spacer element 108.

This is an optimal solution in terms of the bulk, the compactness of the unit 1 and the positioning of the single components inside the unit 1 itself.

The attachment of the fourth support 106 to the second cap 12 takes place through screws 108a.

This solution makes it possible to support a second axle 20 of particularly great length. In particular, the fourth support 106 has a configuration totally similar to that of the third support 28.

The fourth support 106 comprises a fourth through hole 109, at which a fourth seat 109a is foreseen for a fourth bearing 110 that supports the second axle 20.

At the same fourth seat 109a a fourth sealing gasket 112 is also mounted.

The fourth support 106, in a similar way to what is foreseen in the third support 28, comprises a first portion 106a for joining between the second spacer element 86 and the third spacer element 108.

The fourth support 106 also comprises a second support portion 106b of the second axle 20.

The first portion 106a of the fourth support 106 comprises respective abutment surfaces 106c for the edges of the second spacer element 86 and of the third spacer element 108. In this embodiment there is also a second tubular element 114 for protecting the second axle 20.

The second tubular element 114 is arranged between the third support 28 and the fourth support 106 of the second axle 20.

The second tubular element 114 could also be absent.

With respect to the embodiment described here - figures 8-15 - other alternative embodiments could be without the second reduction stage 90, or could be without the fourth support 106 and/or the third spacer element 108.

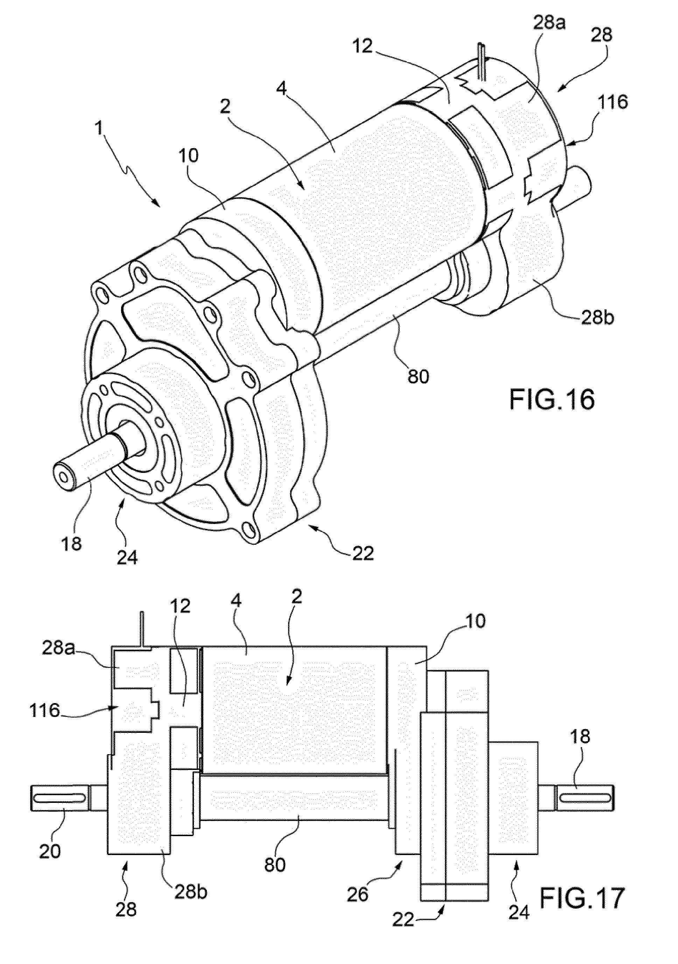

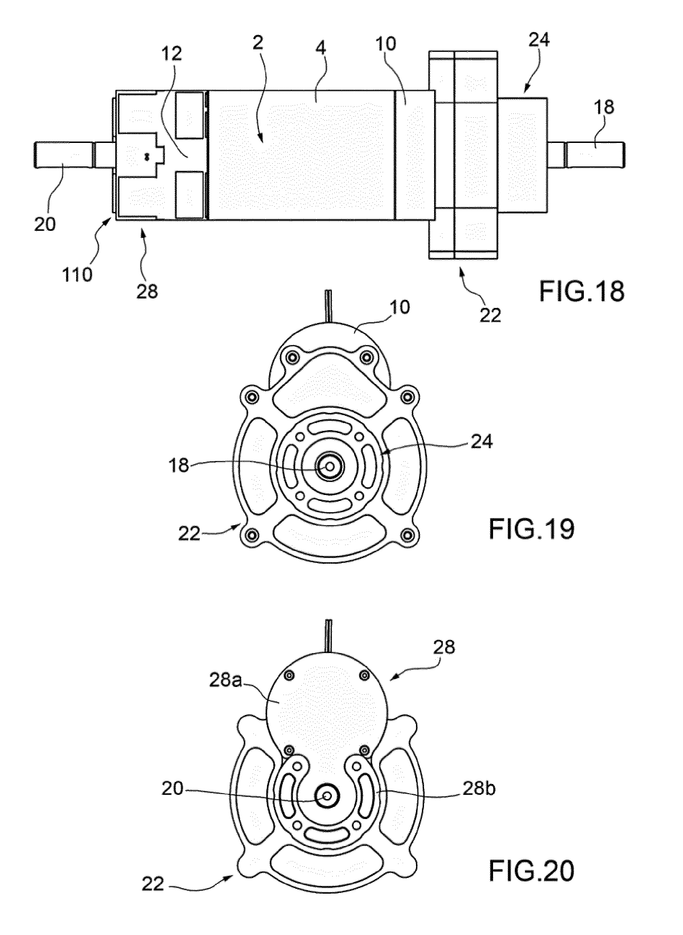

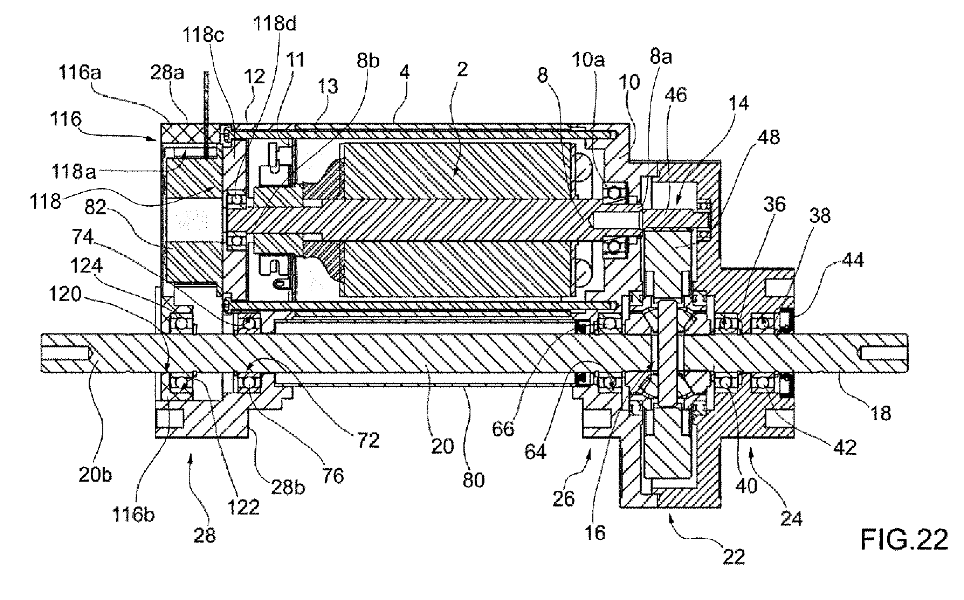

Another embodiment of the drive unit 1 according to the invention is illustrated in figures 16-22.

In the description of this embodiment, the parts corresponding to those of the previous embodiments are indicated with the same reference numeral.

This embodiment of the drive unit 1 according to the invention differs from the previous embodiments in that the third support 28 for the second axle 20 is integral with the second cap 12 of the electric motor 2, i.e. the two parts are integrated in a single piece. In greater detail, the third support 28 comprises a first portion 28a fixedly connected to the second cap 12.

Moreover, the third support 28 comprises a second support portion 28b of the second axle 20 of the drive unit 1.

The third support 28 is affected by a third through hole 72 for the second axle 20; at the third through hole 72 there is a third seat 74 for a respective third support bearing 76 of the distal end 20b of the second axle 20.

Moreover, a closing cover 116 is associated with the third support 28.

The closing cover 116 comprises a first portion 116a and a second portion 116b.

The first portion 116a of the cover 116, together with the first portion 28a of the third support 28, defines a housing space 118 at least for the brake 82 of the motor 2. The cover 116 can be fixed with screws or by pressure.

If so desired, therefore, the drive unit 1 is closed at a first end thereof through a first cover 116, and at the other end thereof opposite the first end, through a second cover 116c.

In particular, the space 118 consists of a first half-space 118a suitable for housing the brake 82, and a second half-space 118b suitable for housing the brush-holding base 11 of the electric motor 2.

The first half-space 118a and the second half-space 118b are separated by a dividing wall 118c, which comprises a relative bearing 118d for the second end 8b of the output shaft.

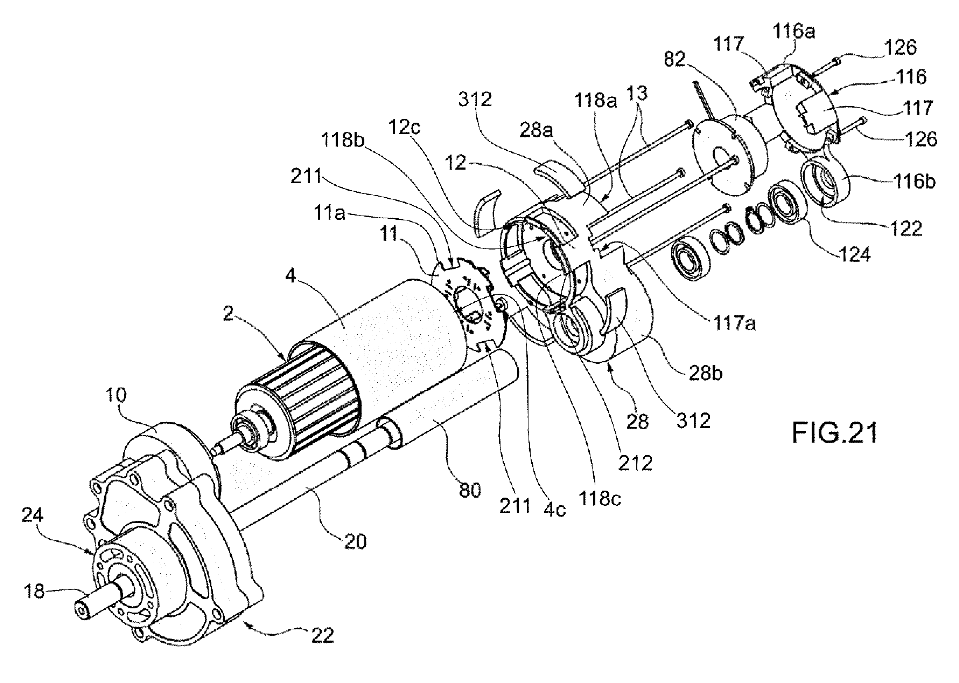

The edge 11a of the brush-holding base 11 is clamped between abutment surfaces 12c, 4c respectively foreseen in the second cap 12 and in the tubular casing 4 of the electric motor 2, as shown for example in figure 21.

The second cap comprises axial appendages 212 of smaller diameter, which engage, in assembled configuration, in circumferential portions of smaller diameter 211 of the edge 11a of the brush-holding base 11.

This is a particularly effective solution of integration of the brake 82 and of the brush-holding base 11 of the motor 2 in the drive unit 1.

In particular it is a solution that is very advantageous in terms of the bulk, the number of components used and the simplicity of mounting.

The second cap 12 also comprises removable portions 312, which allow easy access to the brush-holding base 11.

The first portion 116a of the cover 116 comprises axial appendages 117 that engage in respective recesses 117a foreseen in the first portion 28a of the third support 28.

The second portion 116b of the cover 116, on the other hand, supports the second axle 20.

In particular, the second portion 116b comprises a through opening 120 for the second axle 20; at the through opening 120 there is a housing 122 for a fifth bearing 124.

The cover 116 is connected to the third support 28 through screws 126.

The fifth bearing 124, in some embodiments of the invention, can be absent.

The present embodiment is particularly advantages in terms of manufacturing costs since with a single component - the third support 28 - it is possible to obtain the function of closing the motor 2 - with incorporation of the brake 82 - and of rotatably supporting the third axle 20.

The present embodiment should be taken as the basic version of the drive unit 1 according to the invention, since it is completely free from spacer elements.

The present embodiment can be easily and effectively modified to increase the track of the drive unit 1.

For example, it is possible to foresee a first spacer element 84 arranged between the tubular casing 4 of the motor 2 and the first cap 10, and/or a second spacer element 86 arranged between the tubular casing 4 of the motor 2 and the second cap 12.

The technical mounting solutions to obtain these modifications are totally analogous to those described in the previous embodiments.

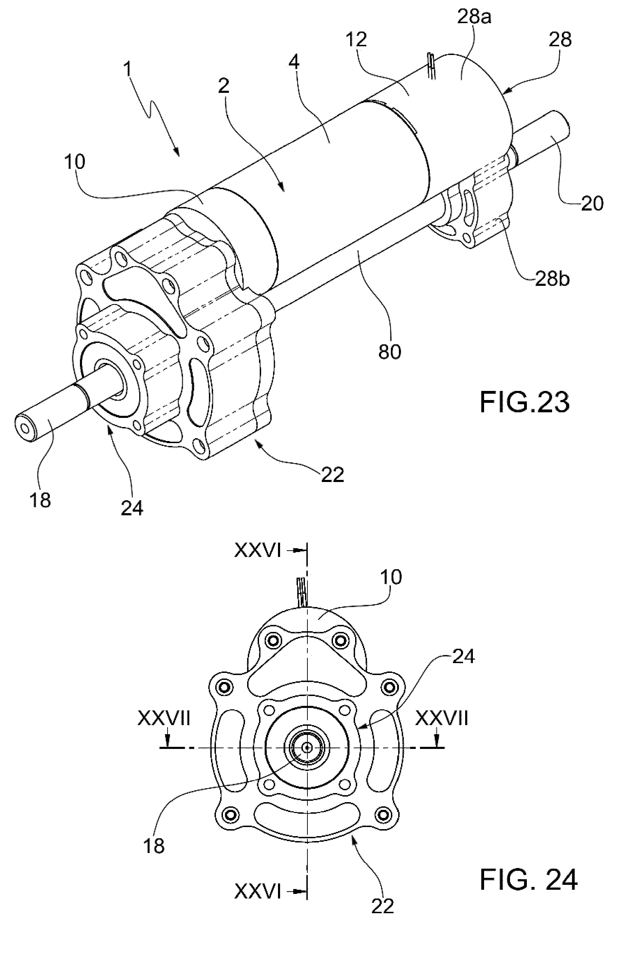

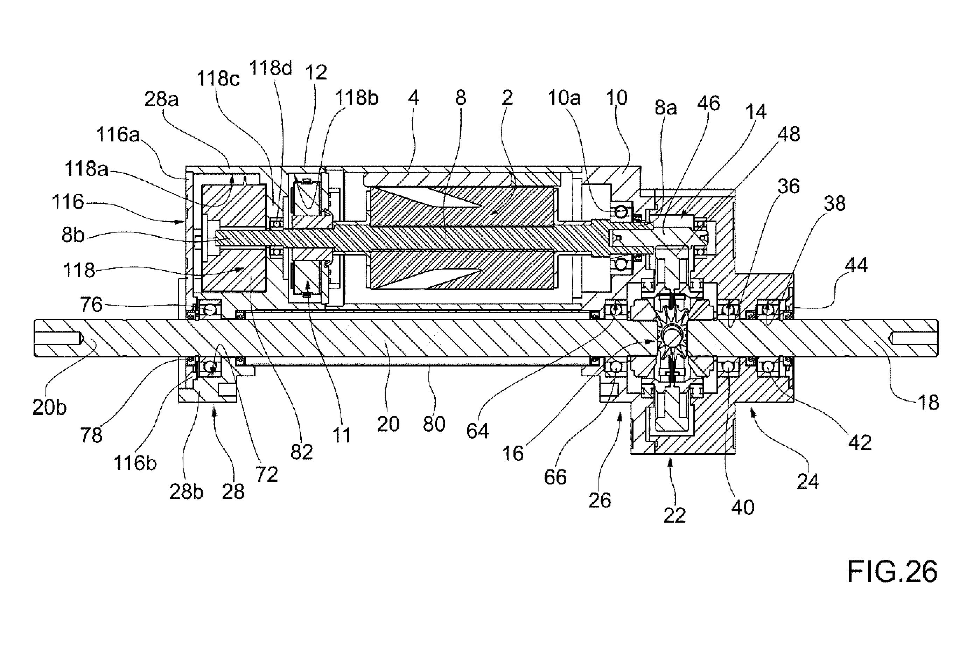

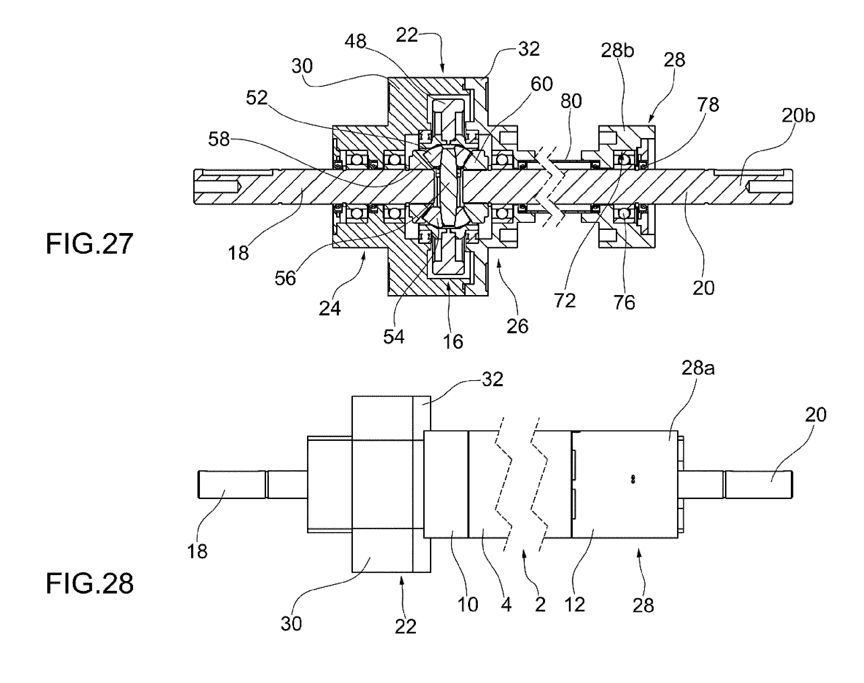

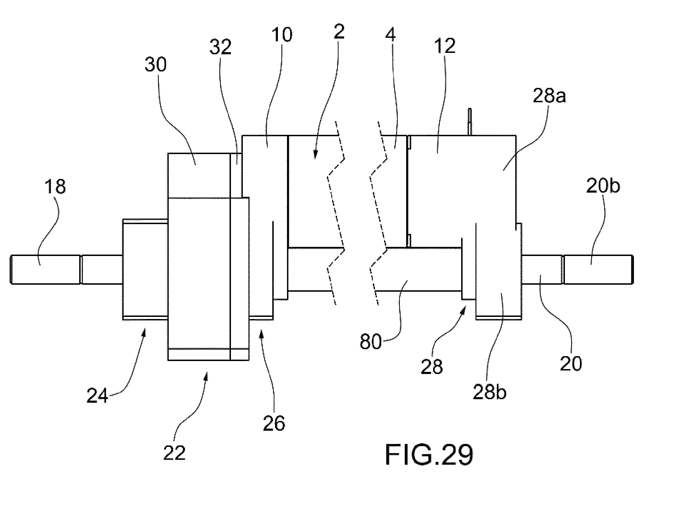

Another embodiment of the drive unit 1 according to the invention is illustrated in figures 23-29.

In the description of this embodiment, the parts corresponding to those of the previous embodiments are indicated with the same reference numeral.

This embodiment of the invention is constructively similar to the previous embodiment according to figures 16-22.

Also in this embodiment, indeed, the third support 28 for the second axle 20 is integral with the second cap 12 of the electric motor 2, i.e. the two parts are made in a single piece.

Moreover, also in this embodiment the first portion 116a of the cover 116 defines, together with the first portion 28a of the third support 28, a housing space 118 at least for the brake 82 of the motor 2.

The space 118 equally comprises a first half-space 118a suitable for housing the brake 82, and a second half-space 118b suitable for housing the brush-holding base 11 of the electric motor 2.

The first half-space 118a and the second half-space 118b are separated by a dividing wall 118c, provided with a respective bearing 118d for the second end 8b of the output shaft 8.

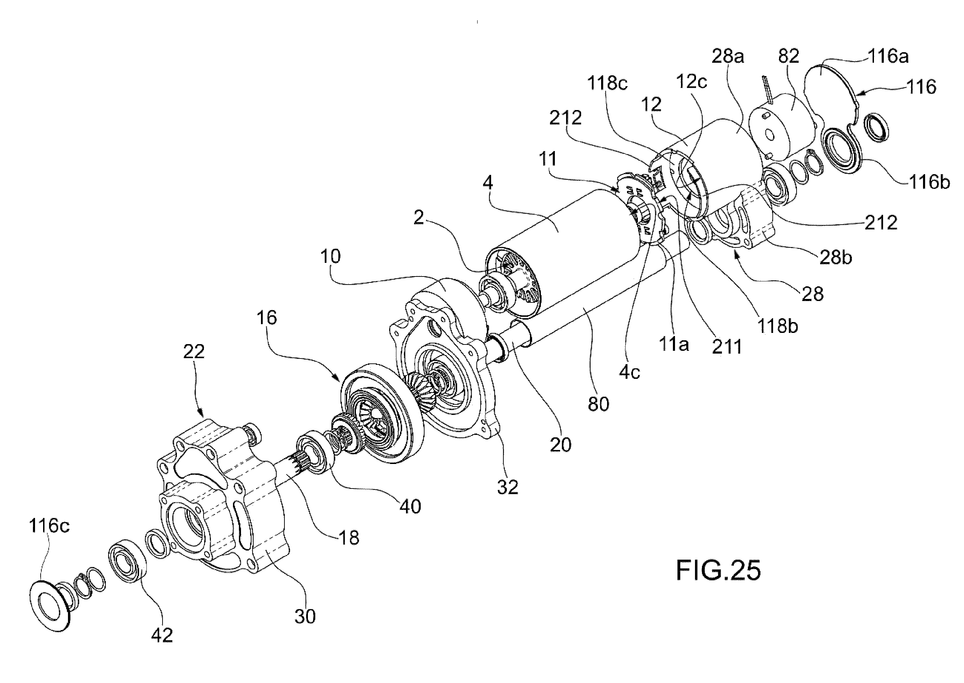

The edge 11a of the brush-holding base 11 is clamped between abutment surfaces 12c, 4c respectively foreseen in the second cap 12 and in the tubular casing 4 of the electric motor 2, as shown for example in figure 25.

Also in this case it is a particularly preferred solution of integration of the brake 82 and of the brush-holding base 11 of the motor 2 in the drive unit 1.

In particular, it is a solution that is very advantageous in terms of the bulk, the number of components used and the simplicity of mounting. In greater detail, the second cap 12 - integral with the first portion 28a of the third support 28 - comprises axial appendages 212 of smaller diameter, only foreseen in some portions of the abutment surface 12c of the second cap 12 itself.

Correspondingly, the edge 11a of the brush-carrying base 11 defines circumferential portions of smaller diameter 211 that, in assembled configuration of the unit, are engaged by the axial appendages 212.

In this way, as stated, the edge 11a of the brush-holding base 11 is effectively clamped between abutment surfaces 12c, 4c.

At the same time, by dismounting the unit, the brush-holding base 11 is quick and easy to access for possible maintenance interventions, thanks to its positioning.

It should also be observed that, with respect to the solution of figures 16-22, the solution according to figures 23-29 is more compact and cost-effective, since at the third support 28 there is a single third bearing 76, instead of the two present in the solution of figures 16-22.

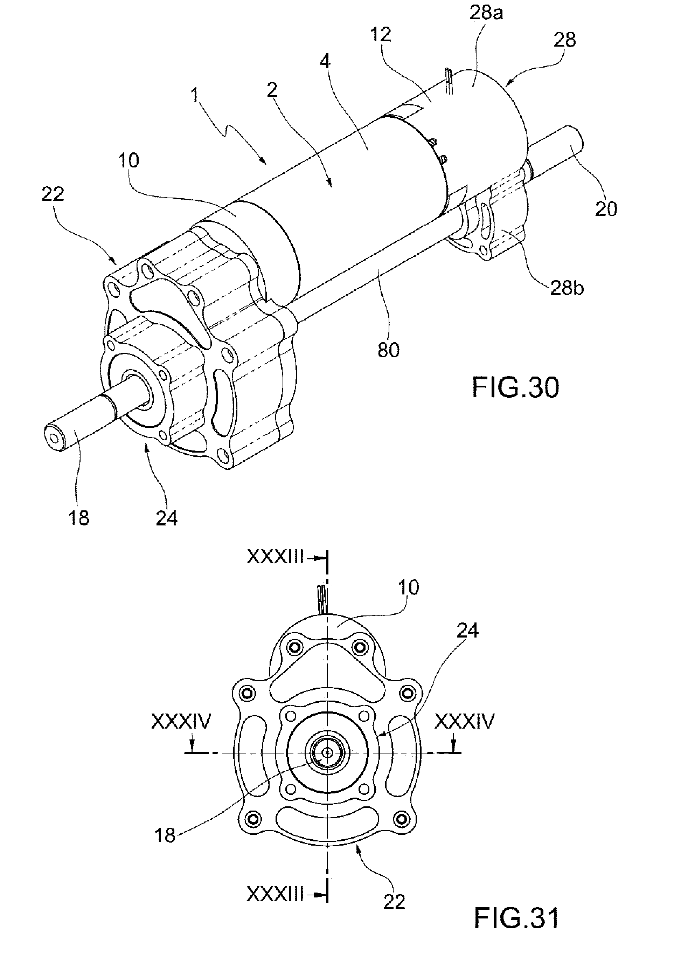

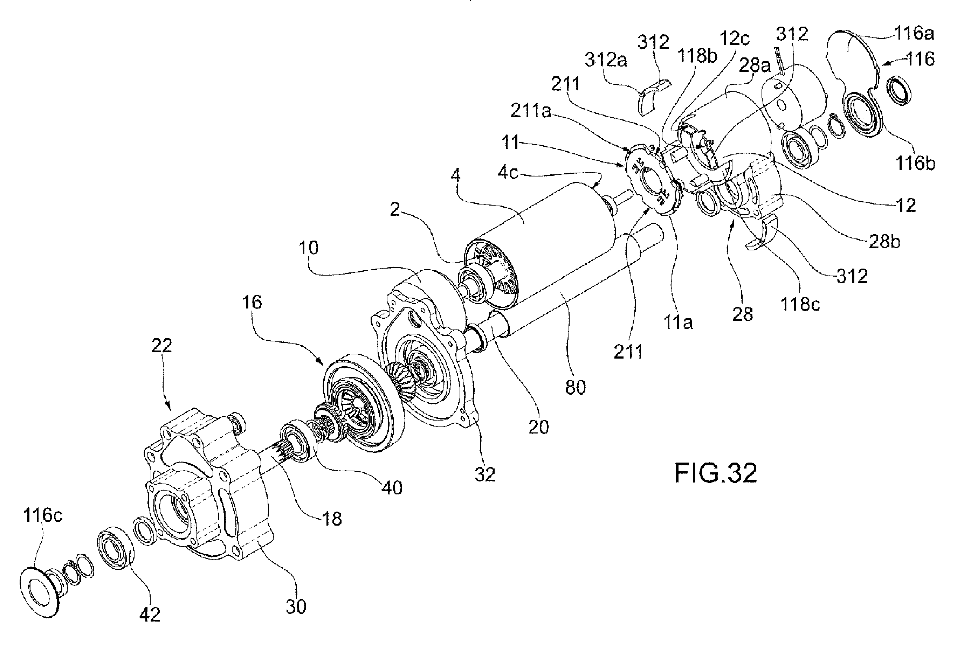

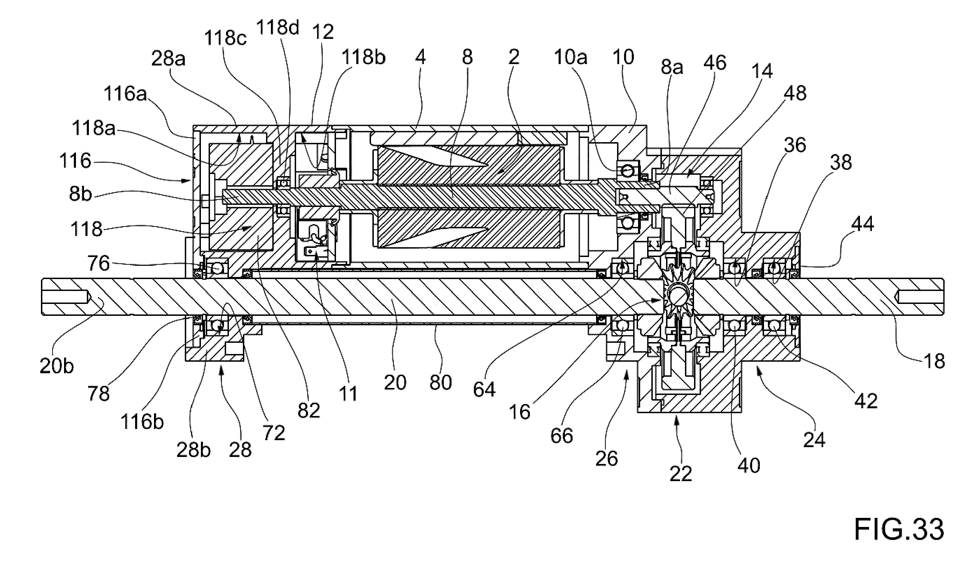

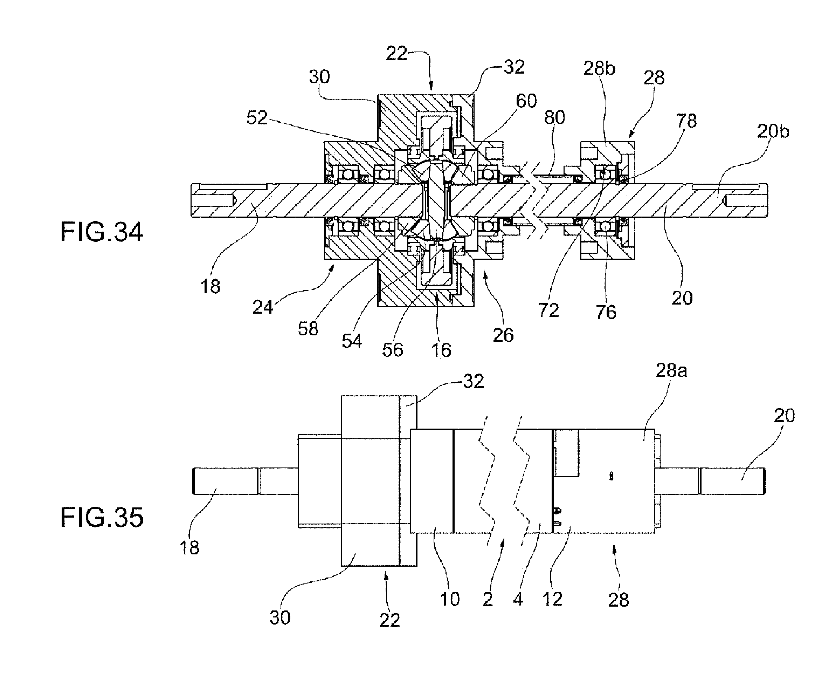

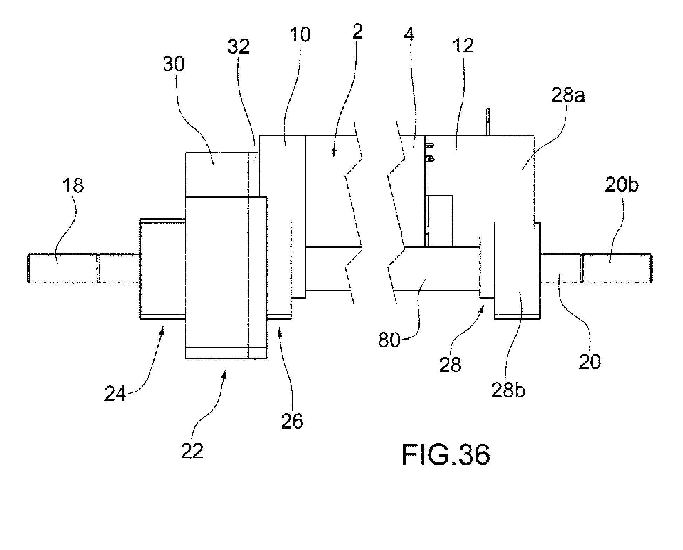

Yet another embodiment of the invention is illustrated in figures 30-36.

This embodiment differs from the embodiment of figures 23-29 in particular for the configuration of the second cap 12, integral with the first portion 28a of the third support 28.

In particular - in an analogous way to what has been described for the embodiment according to figures 16-22 - the second cap 12 comprises removable portions 312 to allow easy access to the brush-holding base 11.

Each removable portion 312 comprises a respective tooth 312a along the edge intended to engage, in assembled configuration, in a respective recess 211a foreseen in the edge 11a of the brush-holding base 11.

It has thus been seen how the invention achieves the proposed purposes.

The drive unit 1 according to the finding, as well as having much lower production costs with respect to known units, makes it possible to more effectively support the actuation axles of the wheels, even with high tracks, with a small transversal bulk that makes it possible to install it in a greater number of applications.

Moreover, the variation of the track of the drive unit can be obtained in a more cost-effective and easier manner with respect to known units.

The incorporation of the brake of the motor is also obtained with a very practical and cost-effective solution.

Stressed canti-levered parts that, in known units, oblige large sizes, with consequent high production costs, are also eliminated.

It should also be emphasised that an important characteristic of the drive unit 1 according to the invention is its complete modularity, i.e. it allows the user to put together the parts described in the different embodiments according to the preferred ways to obtain the desired technical result in terms of track of the unit, in terms of support of the axles 18,20, in relation to the overall cost of the unit, and other factors. More generally, the unit 1 according to the present invention is easy and cost-effective to personalise in relation to the specific requirements of the user, both in terms of the size of the unit and in terms of the positioning of the components inside it.

Another substantial advantage is the easy accessibility of all of the components to carry out maintenance operations and/or replacement of parts.

The present invention has been described according to preferred embodiments, but equivalent variants can be conceived without departing from the scope of protection offered by the following claims.

## Claims

1. Drive unit for electric vehicles, comprising
an electric motor (2), provided with a first cap (10) and with a second cap (12) opposite to one another, and with an output shaft (8) comprising a first end (8a) and an opposite second end (8b),
at least a speed reduction stage (14) connected to said output shaft (8),
at least a mechanical differential (16) associated with said speed reduction stage (14),
a first axle (18) and a second axle (20), parallel to said output shaft (8), associated with said mechanical differential (16) and on which a first wheel (R1) and a second wheel (R2), respectively, of the electric vehicle are mounted,
said mechanical differential (16) being housed within a box (22) integral with said first cap (10),
and rotary support means (24,26,28; 24,26,28,106) of said first axle (18) and second axle (20),
said rotary support means (24,26,28; 24,26,28,106) comprising a first support (24) of said first axle (18) rigidly associated with said box (22),
**characterised in that** said rotatable supporting means (24,26,28; 24,26,28,106) further comprise a second support (26) for the proximal end (20a) of said second axle (20) rigidly associated with said box (22), and a third support (28) for the distal end (20b) of said second axle (20) rigidly associated with said second cap (12) of said electric motor (2).

2. Drive unit according to claim 1, wherein said speed reduction stage (14) is connected to said first end (8a) of said output shaft (8), being further provided a brake (82) for said electric motor (2) associated with said second end (8b) and supported at said third support (28).

3. Drive unit according to claim 1 or 2, wherein said box (22) comprises a first half-shell (30) and a second half-shell (32) coupled with one another, said first support (24) being integral with said first half-shell (30), said first support (24) further comprising a side extension of said first half-shell (30) defining a first through hole (34), at which two first seats (36,38) are provided for two respective first rotatable support bearings (40,42) for said first axle (18).

4. Drive unit according to claim 3, wherein said second support (26) is integral with said second half-shell (32) and comprises a respective second through hole (62) at which a second seat (64) is provided for a second support bearing (66) for supporting said proximal end (20a) of said second axle (20).

5. Drive unit according to the previous claim, wherein said third support (28) comprises a respective third through hole (72) at which a third seat (74) for a third bearing (76) is provided for supporting said distal end (20b) of said second axle (20).

6. Drive unit according to one of the previous claims, comprising at least a spacer element (84,86;84,86,108) interposed between said motor (2) and said first and second supports (24,26) and/or between said motor (2) and said third support (28), adapted to increase the traction unit's track.

7. Drive unit according to the previous claim, comprising a first spacer element (84) interposed between said motor (2) and said first support (24).

8. Drive unit according to claim 6 or 7, comprising a second spacer element (86) interposed between said motor (2) and said third support (28).

9. Drive unit according to claim 8, wherein said rotary support means (24,26,28,106) comprise a fourth support (106) for the distal end of said second axle (20), and a third spacer element (108) interposed between said second cap (12) and said fourth support (106).

10. Drive unit according to the previous claim, wherein said motor (2) comprises a tubular casing (4), and wherein said spacer element (84,86,108) consists of a tubular piece having the same cross section as said tubular casing (4).

11. Drive unit according to one of claims 9,10, wherein said spacer element (84) is suitable for housing at least a second speed reduction stage (90) of the motion transmitted by said motor (2) to said mechanical differential (16).

12. Drive unit according to one of claims 9-11, comprising a brake (82) for said motor (2), interposed between said second cap (12) and said third support (28), or housed within a space (118) provided in said second support (28), or interposed between said second cap (12) and said fourth support (106).

13. Drive unit according to the previous claim, wherein said space (118) of said third support (28) is closed by a cover (116) comprising a housing (122) for a possible fifth bearing (124) for supporting said second axle (20).

14. Drive unit according to one of claims 2-13, wherein said third support (28) comprises a space (118) constituted by at least a first half-space (118a) suitable for housing said brake (82), and a second half-space (118b) suitable for housing the brush-holding base (11) of said electric motor (2), said first half-space (118a) and second half-space (118b) being separated by a dividing wall (118c).

15. Drive unit according to the previous claim, wherein the edge (11a) of said brush-holding base (11) is clamped between abutment surfaces (12c,4c) respectively foreseen in said second cap (12) and in said tubular casing (4) of said electric motor (2) and, if desired, wherein said second cap (12) comprises removable portions (312) suitable to allow easy access to said brush-holding base (11) of said electric motor (2).

16. Drive unit according to one or more of the previous claims, wherein said second axle (20) is housed inside a respective tubular element (80) suitable to protect the rotation of the latter from possible external interference and/or possible workers who might get closer to said drive unit (1) in operation.

17. Drive unit according to one or more of the previous claims, wherein said drive unit (1) is closed at a first end thereof through a first cover (116), and at the other end thereof opposite the first end, through a second cover (116c).
